# EUROPEAN PATENT APPLICATION

(11) **EP 2 280 332 A1**
(43) Date of publication of application: **02.02.2011**
(21) Application number: 09166910.1
(22) Date of filing: 30.07.2009
(51) Int. Cl.: G06F 3/023, G06F 3/048

(54) **A system and method for context based predictive text entry assistance**

(71) Applicant: RESEARCH IN MOTION LIMITED, Waterloo, Ontario N2L 3W8 (CA)
(72) Inventor: Griffin, Jason, Tyler, Waterloo Ontario N2L 3W8 (CA); Scott, Sheryl, Lee, Lorraine, Waterloo Ontario N2L 3W8 (CA); Fux, Vadim, Waterloo Ontario N2L 5Z5 (CA)
(74) Representative: MERH-IP Matias Erny Reichl Hoffmann

(57) **Abstract**

A device is provided for executing a method for providing context based predictive text entry. The device has a processor and a keyboard, a display screen, and a storage device connected to the processor. The method comprises receiving an input from the keyboard, the input comprising a character of a string; gathering relevant contextual data based on the input; retrieving any relevant stored data from the storage device based on the input; generating at least one context based prediction based on the received input, the contextual data, and any relevant stored data; displaying at least one option for completing the string on the display screen based on the at least one prediction; and completing the string if one of the options displayed on the display screen is selected by way of a further input.

## Description

### TECHNICAL FIELD

The present disclosure relates generally to mobile electronic devices, and more particularly to a system and method for context based predictive text entry assistance.

### BACKGROUND

People increasingly have mobile electronic devices, such as cellular phones, personal digital assistants, pagers, etc. Many mobile electronic devices have keyboards, touch screens, or other user input devices that allow the user to enter text into an application, such as a word processor or email application. Entering text on mobile electronic devices can be a cumbersome task, particularly where a user who is in transit must rely on the mobile electronic device for email connectivity.

Some basic predictive text entry assistance solutions are known, such as predicting which word a user is entering and offering options for completing the word based purely on a comparison of the word entered by the user so far with available words in a dictionary. However, these solutions are of limited value and often require the user to enter most or all of the word before the solution suggests the word the user is trying to enter. Requiring a user to enter text in such a thorough and cumbersome way wastes limited processing resources and battery power on the mobile electronic device and wastes the user's time.

### SUMMARY

One aspect of the description provides a device comprising a processor for controlling operation of the wireless device; a keyboard coupled to the processor for accepting an input; at least one display device coupled to the processor for communicating an output; a memory coupled to the processor; and a storage device coupled to the processor. The wireless device includes a predictive text module resident in the memory for execution by the processor, the predictive text module being configured to: receive an input from the keyboard, the input comprising a character of a string; gather relevant contextual data based on the input; retrieve any relevant stored data from the storage device based on the input; generate at least one context based prediction based on the received input, the contextual data, and any relevant stored data; display at least one option for completing the string on the display screen based on the at least one prediction; and complete the string if one of the options displayed on the display screen is selected by way of a further input.

Another aspect of the description provides a method for providing context based predictive text entry on a device having a processor and a keyboard, display screen, and storage device connected to the processor. The method comprises receiving an input from the keyboard, the input comprising a character of a string; gathering relevant contextual data based on the input; retrieving any relevant stored data from the storage device based on the input; generating at least one context based prediction based on the received input, the contextual data, and any relevant stored data; displaying at least one option for completing the string on the display screen based on the at least one prediction; and completing the string if one of the options displayed on the display screen is selected by way of a further input.

Yet another aspect of the description provides a computer program product comprising a computer readable medium having computer readable code stored thereon for execution by a processor of a device. The computer program product causes the processor to provide context based predictive text entry on the device. The device also has a keyboard, display screen, and storage device connected to the processor. The computer program product comprises code for receiving an input from the keyboard, the input comprising a character of a string; code for gathering relevant contextual data based on the input; code for retrieving any relevant stored data from the storage device based on the input; code for generating at least one context based prediction based on the received input, the contextual data, and any relevant stored data; code for displaying at least one option for completing the string on the display screen based on the at least one prediction; and code for completing the string if one of the options displayed on the display screen is selected by way of a further input.

### BRIEF DESCRIPTION OF THE DRAWINGS

Reference will now be made to the drawings, which show by way of example, embodiments of the present disclosure, and in which:

FIG. 1 shows in block diagram form a wireless device suitable for implementing a system and method for context based predictive text entry assistance in accordance with one embodiment;

FIG. 2 shows in block diagram form a communication system suitable for providing the operating environment of the wireless device of FIG. 1 in accordance with one embodiment;

FIG. 3 shows in block diagram form the contents of a memory of the wireless device of FIG. 1;

FIG. 4 is a front view illustrating the wireless device of FIG. 1;

FIG. 5 shows in flowchart form a method for context-based predictive text input in accordance with one example embodiment;

FIG. 6 shows a screen shot of an example user interface for implementing context-based predictive text input in accordance with one example embodiment; and

FIG. 7 shows a screen shot of another example user interface for implementing context-based predictive text input in accordance with one example embodiment.

It will be noted that throughout the appended drawings, like features are identified by like reference numerals.

### DETAILED DESCRIPTION

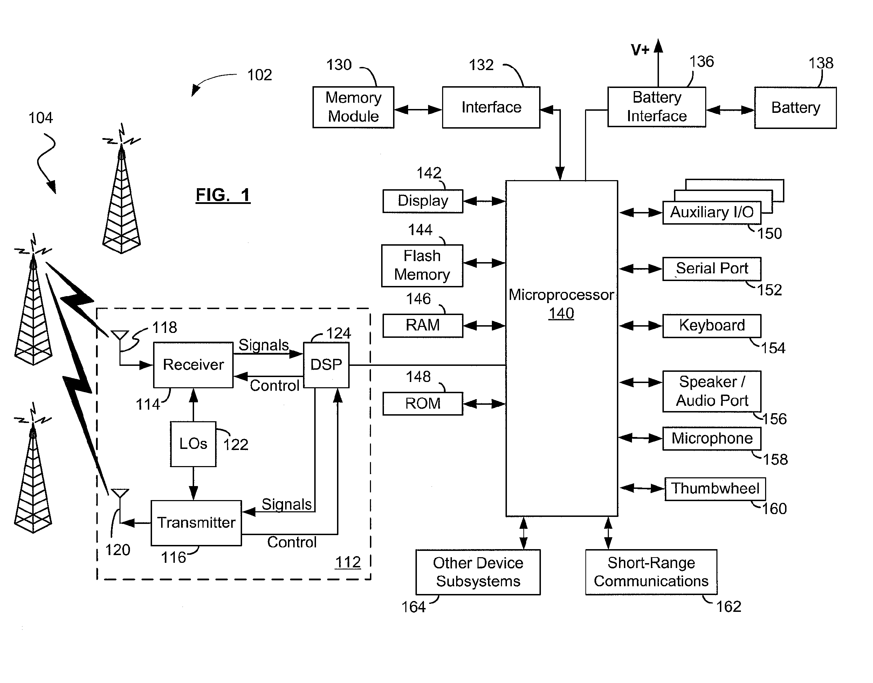

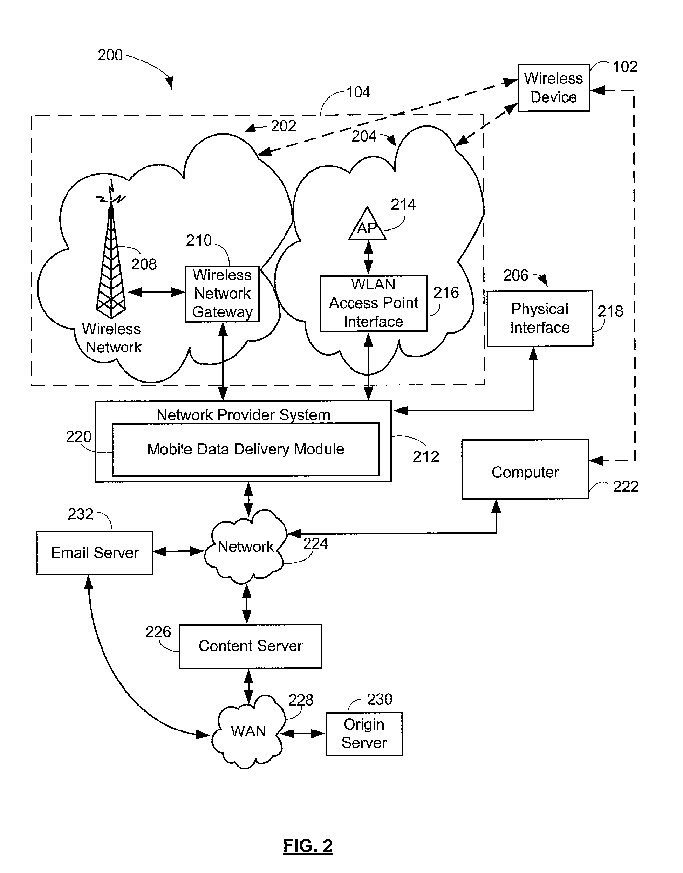

Reference is first made to FIG. 1, which shows a block diagram illustrating a mobile wireless device 102 that may be used for implementing a system and method for context based predictive text entry assistance in accordance with one aspect of the present disclosure. The wireless device 102 communicates through a wireless communication network 104. The wireless network 104 includes antenna, base stations, and supporting radio equipment as for supporting wireless communications between the wireless device 102 and other devices connected to wireless network 104. The wireless network 104 may be coupled to a wireless network gateway and to a wide area network, shown in FIG. 2.

In one embodiment, the wireless device 102 is a two-way communication device having at least voice and/or data communication capabilities, including the capability to communicate with other computer systems. In one embodiment, the wireless device 102 is a handheld device. Depending on the functionality provided by the wireless device 102, it may be referred to as a data messaging device, a two-way pager, a cellular telephone with data messaging capabilities, a wireless Internet appliance, a data communication device (with or without telephony capabilities), or a portable media or music player. The wireless device 102 may communicate with any one of a plurality of fixed transceiver stations within its geographic coverage area.

The wireless device 102 may incorporate a communication subsystem 112, which includes a receiver 114, a transmitter 116, and associated components, such as one or more antenna elements 118 and 120, local oscillators (LOs) 122, and a processing module such as a digital signal processor (DSP) 124. In one embodiment, the antenna elements 118 and 120 may be embedded or internal to the wireless device 102. As will be apparent to those skilled in the field of communications, the particular design of the communication subsystem 112 depends on the wireless network 104 in which the wireless device 102 is intended to operate.

The wireless device 102 may send and receive communication signals over the wireless network 104 after the required network registration or activation procedures have been completed. Signals received by the antenna 118 through the wireless network 104 are input to the receiver 114, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 124. In a similar manner, signals to be transmitted are processed, including modulation and encoding, for example, by the DSP 124. These DSP-processed signals are input to the transmitter 116 for digital-to-analog (D/A) conversion, frequency up conversion, filtering, amplification, and transmission to the wireless network 104 via the antenna 120. The DSP 124 not only processes communication signals, but also provides for receiver and transmitter control. For example, the gains applied to communication signals in the receiver 114 and the transmitter 116 may be adaptively controlled through automatic gain control algorithms implemented in the DSP 124.

Network access is associated with a subscriber or user of the wireless device 102 via a memory module, such as a memory module 130, which may be a Subscriber Identity Module (SIM) card for use in a GSM network or a USIM card for use in a UMTS. The SIM card is inserted in or connected to an interface 132 of the wireless device 102 in order to operate in conjunction with the wireless network 104. Alternatively, the wireless device 102 may have an integrated identity module for use with systems such as Code Division Multiple Access (CDMA) systems.

The wireless device 102 also includes a battery interface 136 for receiving one or more rechargeable batteries 138. The battery 138 provides electrical power to at least some of the electrical circuitry in the wireless device 102, and the battery interface 136 provides a mechanical and electrical connection for the battery 138. The battery interface 136 is coupled to a regulator (not shown) which provides power V+ to the circuitry of the wireless device 102.

The wireless device 102 includes a microprocessor 140 which controls the overall operation of the wireless device 102. Communication functions, including at least data and voice communications, are performed through the communication subsystem 112. The microprocessor 140 also interacts with additional device subsystems such as a display 142, a flash memory 144, a random access memory (RAM) 146, a read-only memory (ROM) 148, auxiliary input/output (I/O) subsystems 150, a Universal Serial Bus (USB) port 152, a keyboard or keypad 154, a speaker or audio port 156 for connecting to, for example a set of headphones, a microphone 158, a navigation input device 160 such as a clickable trackball, a short-range communications subsystem 162, and any other device subsystems generally designated as 164. Some of the subsystems shown in FIG. 1 perform communication-related functions, whereas other subsystems may provide "resident" or on-device functions. Notably, some subsystems, such as the keyboard 154, the display 142, and the navigation input device 160, for example, may be used for both communication-related functions, such as entering a text message for transmission over the wireless network 104, and executing device-resident functions such as a calculator or task list. In one example, the keyboard 154 and the display 142 may be implemented as an integrated touch screen device where a user touches the touch screen display 142 to provide input for the microprocessor 140 in response to options shown on the display 142. Operating system software used by the microprocessor 140 is preferably stored in a persistent store such as the flash memory 144, which may alternatively be the ROM 148 or similar storage element. Those skilled in the art will appreciate that the operating system, specific device applications, or parts thereof, may be temporarily loaded into a volatile store such as the RAM 146.

The microprocessor 140, in addition to its operating system functions, enables execution of software applications on the wireless device 102. A predetermined set of applications that control basic device operations, including data and voice communication applications, will normally be installed on the wireless device 102 during or after manufacture. The wireless device 102 may include a personal information manager (PIM) application having the ability to organize and manage data items relating to a user such as, but not limited to, instant messaging, email, calendar events, voice mails, appointments, and task items. One or more memory stores may be available on the wireless device 102 to facilitate storage of information, such as the flash memory 144, the RAM 146, the ROM 148, the memory module 130, or other types of memory storage devices such as external hard drives, flash drives, or FLASH memory cards represented by the other device subsystems 164, such as Secure Digital (SD) cards, mini SD cards, micro SD cards, etc.

The PIM and/or media applications have the ability to send and receive data items via either the wireless network 104 or a link to a computer system. The link to the computer system may be via the serial port 152 or the short-range communications subsystem 162. Additional applications may also be loaded onto the wireless device 102 through the wireless network 104, the auxiliary I/O subsystem 150, the serial port 152, the short-range communications subsystem 162, or any other suitable subsystem 164, and installed by a user in the RAM 146 or a non-volatile store such as the ROM 148 for execution by the microprocessor 140. Such flexibility in application installation increases the functionality of the wireless device 102 and may provide enhanced on-device functions, communication-related functions, or both. For example, secure communication applications may enable electronic commerce functions and other such financial transactions to be performed using the wireless device 102.

In a data communication mode, a received data signal representing information such as a text message, an email message, a media file to be transferred, or Web page download will be processed by the communication subsystem 112 and input to the microprocessor 140. The microprocessor 140 will further process the signal for output to the display 142 or alternatively to the auxiliary I/O device 150. A user of the wireless device 102 may also compose data items, such as email messages, for example, using the keyboard 154 and/or the navigation input device 160 in conjunction with the display 142 and possibly the auxiliary I/O device 150. The keyboard 154 may be either a complete alphanumeric keyboard or telephone-type keypad or a keypad displayed on a touch screen display 142.

For voice communications, the overall operation of the wireless device 102 is similar, except that the received signals would be output to the speaker or audio port 156 and signals for transmission would be generated by a transducer such as the microphone 158. Alternative voice or audio I/O subsystems, such as a voice message recording subsystem, may also be implemented on the wireless device 102. Although voice or audio signal output is typically accomplished primarily through the speaker or audio port 156, the display 142 may also be used to provide an indication of the identity of a calling party, duration of a voice call, or other voice call related information. Stereo headphones may also be used in place of the speaker 156.

The serial port 152 is normally implemented in a personal digital assistant (PDA) type communication device for which synchronization with a user's computer is a desirable, albeit optional, component. The serial port 152 enables a user to set preferences through an external device or software application and extends the capabilities of the wireless device 102 by providing for information, media file, or software downloads to the wireless device 102 other than through the wireless network 104.

The short-range communications subsystem 162 is an additional optional component which provides for communication between the wireless device 102 and different systems or devices, which need not necessarily be similar devices. For example, the subsystem 162 may include an infrared device and associated circuits and components, or a wireless bus protocol compliant communication mechanism such as a Bluetooth™ communication module to provide for communication with similarly-enabled systems and devices (Bluetooth™ is a registered trademark of Bluetooth SIG, Inc.). In another embodiment, the short-range communications subsystem 162 may be a wireless networking communications subsystem, conforming to IEEE 802.11 standards such as 802.11b, 802.11g, and/or 802.11n.

Reference is next made to FIG. 2, which shows a communication system 200 suitable for use with the wireless device 102 shown in FIG. 1. The communication system 200 generally includes one or more wireless devices 102 (only one of which is shown in FIG. 2) and the wireless network 104. The wireless network 104 may include a wireless Wide Area Network (WAN) 202, a Wireless Local Area Network (WLAN) 204, and/or other interfaces 206 (which may not necessarily be wireless).

Referring to FIG. 2, the wireless WAN 202 may be implemented as a packet-based cellular or mobile network that includes a number of base stations 208 (one of which is shown in FIG. 2) where each of the base stations 208 provides wireless Radio Frequency (RF) coverage to a corresponding area or cell. The wireless WAN 202 is typically operated by a cellular network service provider that sells subscription packages to users of the wireless devices 102. The wireless WAN 202 comprises a number of different types of networks, for example, Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network) or various other third generation networks such as EDGE (Enhanced Data rates for GSM Evolution), UMTS (Universal Mobile Telecommunications Systems), Evolution-Data Optimized (EV-DO), 3G or 4G based networks.

As shown in FIG. 2, the communications system 200 also includes a wireless network gateway 210 and one or more network provider systems 212. The wireless network gateway 210 provides translation and routing services between the network provider system(s) 212 and the WAN 202, which facilitates communication between the wireless devices 102 and other devices (not shown) connected, directly or indirectly, to the network provider system 212.

The WLAN 204 comprises a network which in some examples conforms to IEEE 802.11 standards such as 802.11b, 802.11g, and/or 802.11n; however, other communications protocols may also be used for the WLAN 204. The WLAN 204 includes one or more wireless RF Access Points (AP) 214 (one of which is shown in FIG. 2) that collectively provide a WLAN coverage area. For the embodiment depicted in FIG. 2, the WLAN 204 is operated by an enterprise (for example, a business or university in a building or campus type environment) and the access points 214 are connected to an access point (AP) interface 216. The AP interface 216 provides translation and routing services between the access points 214 and the network provider system 212 to facilitate communication between two or more of the wireless devices 102 and other devices (e.g., such as desktop computers) connected, directly or indirectly, to the network provider system 212. The AP interface 216 is implemented using a computer, for example, a server running a suitable computer program or software.

According to one embodiment, the other interfaces 206 may be implemented using a physical interface indicated by reference 218. The physical interface 218 includes an Ethernet, Universal Serial Bus (USB), Firewire, or infrared (IR) connection implemented to exchange information between the network provider system 212 and the wireless device 102.

The network provider system 212 comprises a server or server modules or a number of servers or server modules which are typically located behind a firewall (not shown). The network provider system 212 may include a number of modules including a mobile data delivery module 220. Various modules running on the network provider system 212 may be implemented as a number of services running on a single server or as a number of interconnected servers each running a software program to implement the functionality of the respective module. The network provider system 212 provides access for the wireless devices 102, through either the wireless WAN 202, the WLAN 204, or the other connection 206 to the devices connected, for example, through an enterprise network 224 (e.g., an intranet), to the network provider system 212. In one embodiment, the data delivery module 220 is implemented on a computer, such as the network provider system 212.

The enterprise network 224 comprises a local area network, an intranet, the Internet, a direct connection, or combinations thereof. The enterprise network 224 may comprise an intranet for a corporation or other type of organization. In at least some embodiments, the network provider system 212 is part of the enterprise network 224, and is located behind a corporate firewall and connected to the wireless network gateway 210 through the Internet. A computer 222 (e.g., a desktop or laptop computer) belonging to the user of the wireless device 102 is typically connected to the enterprise network 224. As described earlier, the wireless device 102 may be temporarily and directly connected to the computer 222 using, for example, the serial port 152. This direct connection may make use of a cradle or docking station connected to a serial port of the computer 222, where the mobile device 102 is placed in the cradle, therefore completing the serial connection between the mobile device 102 and the computer 222. Alternatively, the wireless device 102 may communicate with the computer 222 using the communication subsystem 112 and the WAN 202 and/or the short-range communications subsystem 162 and the WLAN 204.

As shown in FIG. 2, an application/content server 226 may be connected to the enterprise network 224 and also to another network, for example a Wide Area Network (WAN) 228. In some embodiments, an email server 232 and/or the content server 226 form part of the enterprise network 224. The WAN 228 may further connect to other networks. The WAN 228 may comprise or be configured with the Internet, a direct connection, a LAN, a wireless communication link, or any combination thereof. Content providers, such as Web servers, may be connected to the WAN 228, an example of which is shown in FIG. 2 as an origin server 230.

According to one embodiment, the mobile data delivery module 220 provides connectivity between the wireless WAN 202 and the WLAN 204 and the other connection 206 and devices and/or networks connected directly or indirectly to the network provider system 212. In one embodiment, the connectivity provided may be Hypertext Transfer Protocol (HTTP) based connectivity providing an Internet based service connection to devices connected to the wireless WAN 202, the WLAN 204, or the other connection 206 and devices and/or networks connected directly or indirectly to the network provider system 212. The network 224, the application/content server 226, the WAN 228, and the origin server 230, are individually and/or collectively in various combinations a content source for the network provider system 212. It will be appreciated that the system shown in FIG. 2 comprises but one possible communication network or configuration of a multitude of possible configurations for use with the wireless devices 102.

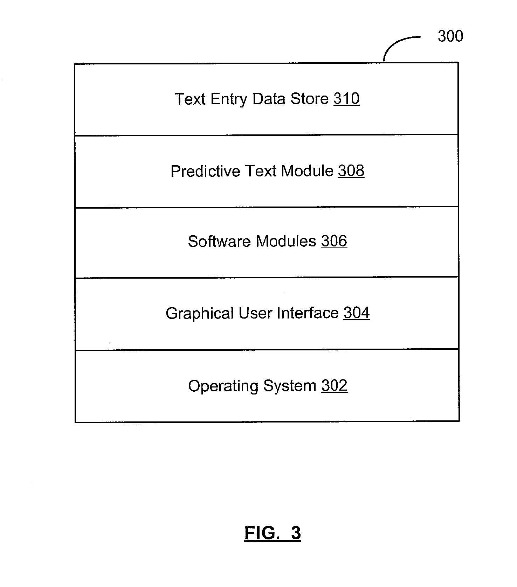

Reference is next made to FIG. 3, which shows a block diagram illustrating a memory 300 of the wireless device 102. The memory 300 has various software components for controlling the wireless device 102 and may include, for example, the flash memory 144, the RAM 146, the ROM 148, the memory module 130 and/or the other device subsystems 164. In accordance with one embodiment, the wireless device 102 is intended to be a multi-tasking wireless communications device configured for sending and receiving data items and for making and receiving voice calls that also includes various applications enabling users to listen to music, watch video files, play games, view picture files, surf the internet wirelessly, etc. To provide a user-friendly environment to control the operation of the wireless device 102, an operating system (OS) 302 resident on the wireless device 102 provides a basic set of operations for supporting various applications typically operable through a graphical user interface (GUI) 304. For example, the operating system 302 provides basic input/output system features to obtain input from the auxiliary I/O 150, the keyboard 154 or touch screen display 142, the clickable thumbwheel 160, and other input devices, and to facilitate output to the user via the display 142. The GUI 304 is typically a component of the operating system 302. One or more software modules 306 for managing communications or providing a personal digital assistant (PDA) or other functions may also be included. The memory 300 also includes an email and calendar client, which may be combined in, for example, a PIM application having email-based calendaring and scheduling functions. Typically, the PIM is installed as one of the software modules 306.

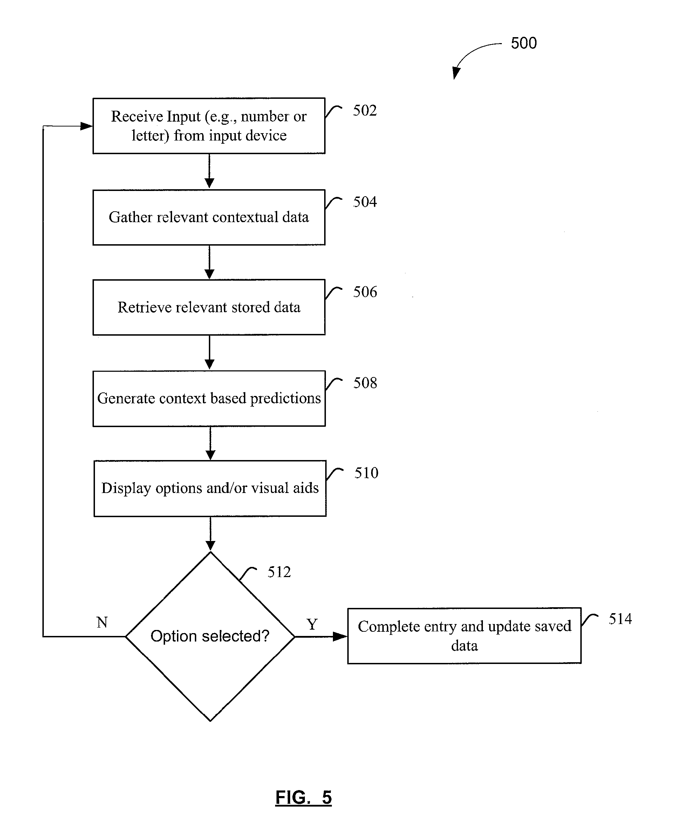

The memory 300 also includes a predictive text module 308 and a text entry data store 310. The predictive text module 308 interacts with aspects of the GUI 304 and OS 302 to provide suggestions for completing strings, such as words, phrases, or numbers that the user is currently entering. The user may then select one of these suggestions for completing the word, phrase, or string the user is entering. In one example, the predictive text module 308 is integrated into the OS 302 or the GUI 304 and may not be a discrete module 308 as shown in FIG. 3, depending on the design criteria of a particular application. The predictive text module 308 may save and/or retrieve data in the text entry data store 310. The text entry data store 310 may be used for saving data related to the particular text entry habits of particular users, for example the web sites the user most commonly visits, where the user lives, what type of profession the user is employed in, or any data that aids the predictive text module 308 in predicting strings that the user would be likely to enter based on the context of the entry and the context of the particular user. Operation of the predictive text module 308 and interaction of this module with the text entry data store 310 is described in more detail below in connection with FIGS. 5-7.

Thus, the wireless device 102 includes computer executable programmed instructions for directing the wireless device 102 to implement various applications. The programmed instructions may be embodied in the one or more software modules 306 resident in the memory 300 of the wireless device 102. Alternatively, the programmed instructions may be tangibly embodied on a computer readable medium (such as a DVD, CD, floppy disk or other storage media) which may be used for transporting the programmed instructions to the memory 300 of the wireless device 102 (e.g., A computer program product comprising a computer readable medium having computer readable code stored thereon, for execution by a processor).

Alternatively, the programmed instructions may be embedded in a computer-readable, signal-bearing medium (as opposed to the computer readable medium, discussed above) that is uploaded to the wireless network 104 by a vendor or supplier of the programmed instructions, and this signal-bearing medium may be downloaded through one or more of the interfaces 112, 150, 152, 162 to the wireless device 102 from, for example, the wireless network 104 by end users.

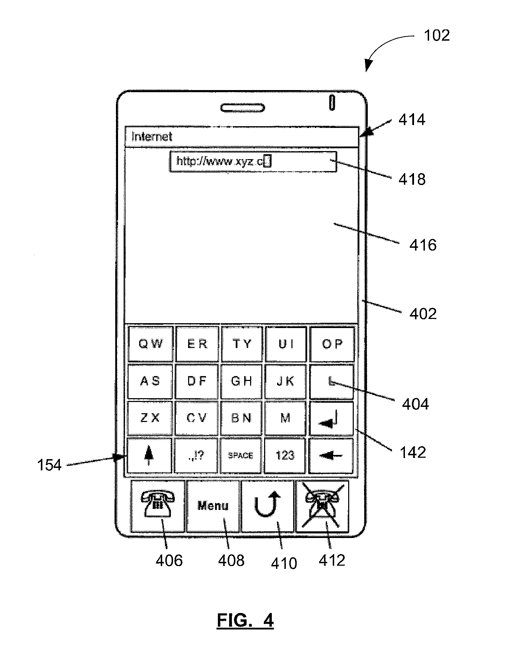

Reference is next made to FIG. 4, which shows a front view of an example mobile electronic device 102 in portrait orientation. The mobile electronic device 102 may include a housing or casing 402 that houses the internal components that are shown in FIG. 1 and frames the touch screen display 142 such that the touch screen display 142 is exposed for user-interaction therewith when the mobile electronic device 102 is in use. In the example orientation shown in FIG. 4, the touch screen display 142 may include a portrait mode virtual keyboard 154 for user entry of data in the form of, for example, text during operation of the mobile electronic device 102. It will be appreciated that such a virtual keyboard 154 may be used for data entry in any suitable application such as in an electronic mail application, during electronic mail composition or in any other suitable application. The portrait mode virtual keyboard 154 of FIG. 4 may be provided for data entry in an Internet browser application and is shown as a reduced keyboard for example purposes. The present disclosure is not limited to the portrait mode virtual keyboard 154 shown, as other keyboards including other reduced keyboards or full keyboards are possible. Suitable keyboards may include full or reduced QWERTY keyboards, full or reduced Dvorak keyboards, and other full or reduced keyboards, including keyboards adapted for non-English languages. Other suitable keyboards include AZERTY keyboards, QWERTZ keyboards or the ITU Standard E.161 alphanumeric telephone keypad layout, such as those found on telephones.

The touch screen display 142 can be any suitable touch screen display such as a capacitive touch screen display. A capacitive touch screen display 142 may include the display device, such as an LCD display and a touch-sensitive overlay, in the form of a capacitive touch-sensitive overlay. It will be appreciated that the capacitive touch-sensitive overlay may include a number of layers in a stack and may be fixed to the display 142 via a suitable optically clear adhesive. The layers can include, for example a substrate fixed to the LCD display by a suitable adhesive, a ground shield layer, a barrier layer, a pair of capacitive touch sensor layers separated by a substrate or other barrier layer, and a cover layer fixed to the second capacitive touch sensor layer by a suitable adhesive. The capacitive touch sensor layers can be any suitable material such as patterned indium tin oxide (ITO).

A touch event may be detected upon user touching of the touch screen display 142. Such a touch event can be determined upon a user touch at the touch screen display 142 for selection of, for example, a feature in a list, such as a message or other feature of for scrolling in the list or selecting a virtual input key. Signals may be sent from the touch-sensitive overlay to a controller coupled to the processor 140 when a suitable object such as a finger or other conductive object held in the bare hand of a user, is detected. Thus, the touch event may be detected and the X and Y location of the touch may be determined. The X and Y location of the touch may be determined to fall within the touch-sensitive area defined by the boundary on the touch screen display 142.

In the present example, the X and Y location of a touch event may be both determined with the X location determined by a signal generated as a result of capacitive coupling with one of the touch sensor layers and the Y location determined by the signal generated as a result of capacitive coupling with the other of the touch sensor layers. Each of the touch-sensor layers may provide a signal to the controller as a result of capacitive coupling with a suitable object such as a finger of a user or a conductive object held in a bare hand of a user resulting in a change in the electric field of each of the touch sensor layers. The signals may represent the respective X and Y touch location values. It will be appreciated that other attributes of the user's touch on the touch screen display 142 can be determined. For example, the size and the shape of the touch on the touch screen display 142 can be determined in addition to the location (e.g., X and Y values) based on the signals received at the controller from the touch sensor layers.

It will be appreciated that a user's touch on the touch screen display 142 may be determined by determining the X and Y touch location and user-selected input may be determined based on the X and Y touch location and the application executed by the processor 140. This determination may be carried out by the processor 140 using one or more software modules 306, including the specific application being executed. In the example screen shown in the front view of FIG. 4, the application may provide the virtual keyboard 154 having a plurality of virtual input keys or buttons, which can be selected by the user. The user selected virtual input key may be matched to the X and Y touch location. Thus, the button selected by the user may be determined based on the X and Y touch location and the application. In the example shown in FIG. 4, the user may enter text via the virtual keyboard 154, selecting characters or symbols associated with the virtual input keys, such as alphanumeric characters from the virtual keyboard 154 by touching the touch screen display 142 at the location of the characters, corresponding to the virtual input keys, of the virtual keyboard 154. In example embodiments of the mobile electronic device 102, the text or data entry may be accomplished by a "click to enter" operation. Once the user has selected a character or symbol, the character or symbol may be entered by depressing a virtual input key 404 on the touch screen display 142 with sufficient force to overcome the bias of the touch screen display 142, to cause movement of the touch screen display 142 and actuate a switch. The selection of the virtual input key 404 (e.g., based on the X and Y location on the touch screen display) and the actuation of the switch may result in signals that may be received by the main processor 140, thereby entering the corresponding character or symbol for rendering on the touch screen display. The "click to enter" operation may provide a tactile feedback confirming the entry to the user, thereby reducing the chance of inadvertent double entry requiring correction. This may also reduce the need for additional user interaction and use time thereby, reducing battery consumption. The click entry may also allow the user to touch the device and ensure the correct character or symbol is selected before entry of that character or symbol by clicking. In general, the characters may be alphanumeric characters, although other characters may also be possible, such as characters for non-English languages.

According to the present example as illustrated in FIG. 4, the main processor 140 may receive a user-selection of an Internet browser application for browsing the Internet by, for example, determination of a touch event at an Internet browser icon (not shown) displayed on the touch screen display 142.

For illustrative purposes, the virtual keyboard 154 may be rendered in the portrait mode as shown in FIG. 4. Devices, such as accelerometers, can be used to determine the relative orientation of the mobile electronic device 102 and change the orientation of the touch screen display accordingly. In the present example, the portrait mode virtual keyboard 154 may be a reduced QWERTY keyboard in which multiple alphanumeric characters and symbols may share virtual input keys or buttons 404. The virtual input keys or buttons 404 may be rendered with the alphanumeric characters and other keyboard buttons displayed in an upright position for the user. The mobile electronic device 102 can be operated in any suitable mode for determining a user-desired one of the letters upon determination of a touch event at the respective one of the virtual input keys buttons 404 of the virtual keyboard 154. For example, letters can be selected using a single-tap mode, multi-tap mode, a text prediction mode or using any other suitable mode. The mobile electronic device 102 according to the present example may also include four physical buttons 406, 408, 410, 412 in the housing 402 for user-selection for performing functions or operations including an "off-hook" button 406 for placing an outgoing cellular telephone call or receiving an incoming cellular telephone call, a Menu button 408 for displaying a context-sensitive menu or submenu, an escape button 410 for returning to a previous screen or exiting an application, and an "on-hook" button 412 for ending a cellular telephone call. The remainder of the buttons shown on the face of the example mobile electronic device 102 of FIG. 4 may be virtual buttons or input keys 404 on the touch screen display 142.

Along with the virtual keyboard 154, a display area may be rendered, which in the present example may be a portrait mode display area 414 that is a portrait mode Internet browser display screen 416. The display area may be provided in the portrait mode as a result of determination of the orientation at the accelerometer (not shown). The display area may be rendered above the portrait mode virtual keyboard 154 when the mobile electronic device 102 is in the portrait orientation.

As a result of user touching any of the virtual buttons or input keys 404 of the virtual keyboard 154 and actuation of the switch, data input received from the virtual keyboard 154 may be rendered in a data entry field 418 of the Internet browser display screen 416. As shown, input may be received in the form of user selection of characters or symbols by touching the virtual buttons or input keys 404 so as to select the desired character or symbol associated with the virtual button or input key 404 in either the portrait mode or landscape mode, and entry by actuation of the switch. In the example shown in FIG. 4, the user enters "http://www.xyz.c" and the data received may be displayed in the data entry field 418 of the portrait mode Internet browser display screen 416.

When entering data, the user may turn the mobile electronic device 102 to a different orientation to provide a different keyboard layout such as to change from a reduced keyboard layout in the portrait orientation to a full QWERTY keyboard layout in the landscape orientation, as in the present example. In another example, the user may also choose to turn the mobile electronic device 102 to provide a different display area for the application.

Reference is next made to FIG. 5, which shows in flowchart form a method 500 for context-based predictive text input in accordance with one embodiment. While the method is referred to as being based on predictive text input, symbols may also be input along with alphanumeric characters such as letters and numbers.

In one example, the method 500 is controlled and executed by the predictive text module 308. Alternatively, the method 500 may be controlled and executed by the OS 302, the GUI 304, or any of the other software modules 306.

The method 500 begins at a block 502, where the wireless device 102 receives an input (e.g. from a keyboard or keypad 154 or touch screen display 142) as a user is entering a character of a string (e.g. word, phrase, number, or series of one or more symbols, or any combination of these). For example, the user may currently start entering a web site URL into a browser and may begin by pressing the first w in "www". Entry of such text into an address field of the web browser, or into any application that receives text from a user, initiates the method 500, beginning with block 502.

Next, at a block 504, the method 500 gathers relevant contextual data based on the input. For example, in the case where a user is entering a web site URL into a browser, the method 500 may gather information such as the fact that the user is in the browser application, is entering text into the address location field, and has started with a w, indicating that the user is entering a world wide web address of the form "www.***.***", with the rest of the address yet to be entered. Other examples of contextual data that may be gathered in the step 504 include the type of application the user is entering text into, the type of field the user is entering text into, what actions the user had previously taken on the wireless device 102, the grammatical context of the text the user is entering, the country the user is in if the user is entering a URL address or phone number, the time of day or date if the user appears to be entering the time of day or date, entries involving currency, etc.

Next, at a block 506, the method 500 retrieves relevant stored data based on the input. The stored data may include preloaded data and/or learned data. For example, preloaded data may include information used by the method 500 for generating suggested completions of data being entered, such items as when a web site address is being entered and the user is currently in Canada, the common suffix for a Canadian web site is ".ca". In one example, learned data may be stored in the text entry data store 310, as described below. Further, the learned data may be shared among groups, for example shared with various wireless devices by a server (e.g., the content server 226) through the system 200, since groups often use similar terms or phrases depending on the subject matter of the group.

The text entry data store may be used by the method 500 (e.g., at a block 510, to be described below) to save historical contextual information about particular users and habits of those particular users with regards to text entry. This information may be used by the method 500 to enable the method 500 as a learning method, which learns over time to improve the accuracy of future predictions based on entries made by the user in the past. For example, if the user often enters web addresses, the text entry data store 310 may store the web addresses previously entered by the user and the frequency of those entries as a tool for predicting likely future entries by the user. This may apply to any application; for example, a word processor application could store all words previously entered by the user and the frequency of those words in the text entry data store 310 or a telephone application, email application, or PIM may store all phone numbers or email addresses previously entered by a user and the frequency of the entries. In another example, frequencies of addresses and/or phone numbers may be linked through contact information such that if a particular person with a common name (e.g., Bob) is often called or emailed and a user begins to enter "Bob", Bob's name may appear first in the list of all "Bobs" in the user's contact list. Other examples of data that may be stored as the stored data include entire words, phrases, sentences, or even document templates. These words, phrases, sentences, or document templates may either be learned data based on entries made by the user, or preloaded data based on commonly used words, phrases, or sentences. The stored data may also be used based on context or be dynamically generated.

Next, at a block 508, the method 500 generates at least one context-based prediction or predictions based on the input received in the block 502, the contextual data gathered in the block 504, and the relevant stored data retrieved in the block 506. Typically, the method 500 may provide to the user the most likely completions for the input the user has entered so far. In one example, the method 500 may provide to the user between one and five most likely completions (e.g., options) for the input the user has entered so far, with the five most likely options arranged in order from most likely to least likely.

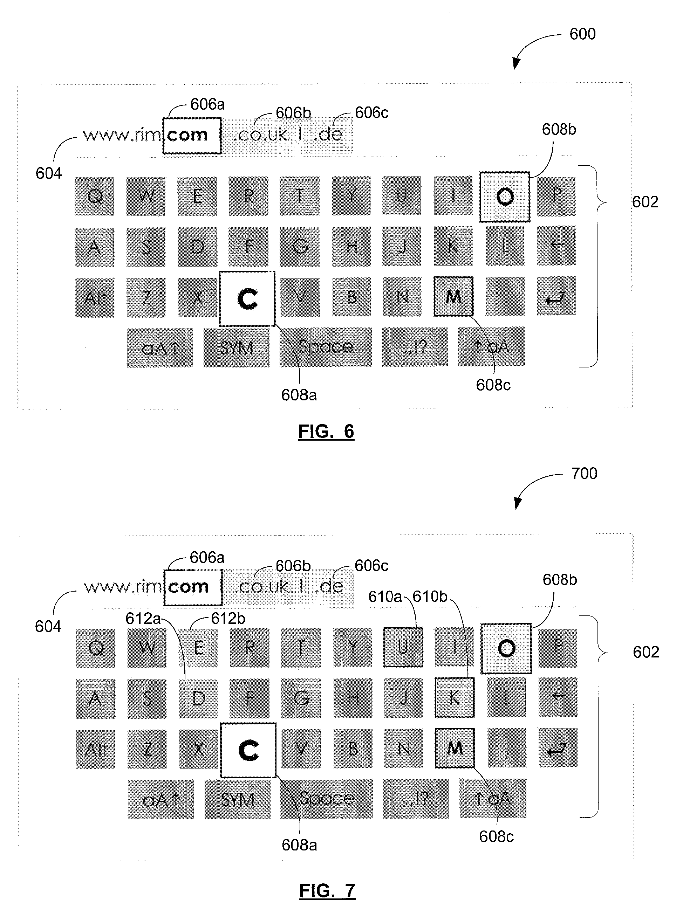

Next, at a block 510, the method 500 displays the most likely options generated at the block 508 to the user by displaying the options on the screen for completing the string. In one example, the options displayed on the screen may be accompanied by visual aids designed to aid the user in selecting input options to complete the string that the user is currently entering. Examples of such visual aids are described below in connection with FIGS. 6 and 7. In another example, audible aids or even tactile aids could be used to assist the user in completing the entry.

Next at a block 512, the method 500 monitors the input devices of the wireless device 102 (e.g., the keypad 154, the touch screen display 142, the navigation input device 160) to determine if the user is selecting one of the options provided to the user for completing the string. If the user selects one of the options, the method 500 proceeds to a block 514 where the method completes the entry as selected by the user and updates the saved data in the text entry data store 310, as appropriate. For example, at the block 514, the string entered may be saved and/or updated in the store 310, along with the frequency with which the user has previously entered this string and the application into which the entry was made, and other relevant facts. The method 500 may also allow the user to go back from the step 514 to the step 510 if the user had accidentally selected the wrong option at the step 512 and changes his mind about which option he wishes to select. This reversion to the step 510 may be triggered by an appropriate input, such as by pressing a particular key, such as the space key.

If the user did not select one of the options at the block 512, the method 500 returns to the block 502 where another character is entered by the user for the string or a subsequent string that the user is currently entering and the method 500 repeats itself. Therefore, as described above, the method 500 would typically be executed once for each character entered by the user into the wireless device 102 using the input devices.

Reference is next made to FIG. 6, which shows a screen shot of an example user interface 600 for implementing context-based predictive text input in accordance with one example embodiment. While FIG. 6 shows a particular key layout for the keyboard 602, the key layout used may be any of a QWERTY layout, a reduced QWERTY layout, a phone dial keypad, or even a keypad showing symbols, different combinations of symbols with traditional letters, or any combination thereof. User interface 600 provides one example of the user interface provided by the method 500 (e.g., the GUI 304 and/or the predictive text module 308) that may provide such visual aids, as referred to in block 510 of the method 500.

User interface 600 includes a keyboard 602 illustrated graphically on a display, for example the touch screen display 142. User interface 600 also includes a text entry field 604. In the present example, the text entry field 604 may be used to enter a URL into a web browser application. However, the text entry field 604 may be used for any type of text entry into any of the applications or software modules 306. In the example where the user interface 600 is used in connection with the wireless device 102 having the touch screen display 142, each of the buttons shown forming part of the keyboard 602 may be touch sensitive such that the user triggers or activates a particular button simply by pressing the location of the touch screen display 142 where the particular key is shown. While user interface 600 is described as being used in connection with the wireless device 102 having the touch screen display 142, the wireless device 102 may alternatively have a conventional keyboard 154 such as the ITU E.161 standard keypad and conventional display 142, and the user interface 600 may show the keyboard 602 to provide visual cues to the user.

In the current example, the user has begun entering a URL, which when complete would input "www.rim.com". In the example shown in FIG. 6, the user has entered "www.rim." thus far, and the method 500 is actively proposing options for completing the entry, for example at the block 510 of the method 500. For example, the predictive text module 308 may know, either from gathering relevant contextual data at the block 504 or by retrieving relevant stored data at the block 506, that the user is likely to enter "www.rim.com". However, perhaps the user had previously travelled in the United Kingdom or Germany or had previously visited these international sites, and the method 500 knows there is a reasonable chance that the user may enter "www.rim.com", "www.rim.co.uk", or "www.rim.de". In one example, the first option shown may be based initially on where the user is located and remaining options may be sorted alphabetically. Over time, as the method 500 learns, the options may be shown according to past frequency. In the event of the user travelling, the first options displayed may be the most frequently entered address, followed by options based on the user's current location.

In the example shown in FIG. 6, the block 510 provides these options to the user, as indicated by references 600, individually indicated as 606a, 606b, and 606c. In one example, the ordering of the three options 606a, 606b, 606c may be based on the relative frequency that the user had previously visited these individual web sites, for example as retrieved from the text entry data store 310 at the step 506 of the method 500. In another example, the ordering of the three options 606 may be based on the order or reverse order in which the user recently visited the United States, Germany, and the United Kingdom. If the user wishes to select any of the options 606a, 606b, or 606c, the user may either select the area associated with any one of these options by touching the area on the touch screen display 142, or alternatively, the user may select and click or point and click these options using, for example, the track ball 160b.

The user interface 600 may provide visual aids for the user wishing to manually enter additional characters after the characters "www.rim." based on the predictions or options 606, indicated by references 608a, 608b, and 608c. For example, the most likely next character to be entered by the user, as determined at the block 508, is the letter "c". Visual aid 608a shows the letter "c" enlarged on the keyboard 602, outlined with a solid line, and lightened in colour such that the letter "c" is the largest and/or brightest key on the keyboard 154. The enlargement of the letter "c" additionally serves to make the letter "c" easier to press, in the example of a touch screen display 142. In another example embodiment, selection of a neighbouring key such as "x" that constitutes an unlikely input causes the letter "c" to be notwithstandingly presented as the first option 606a, and the letter "x" as a second option 606b.

Further in the present example, the next most likely next character to be entered by the user after the letter "c", as determined at the block 508, is the letter "o". Visual aid 608b shows the letter "o" enlarged on the keyboard 602 (although not as enlarged as the letter "c"), outlined with a solid line, and lightened in colour (although not lightened as much as the letter "c") such that the letter "o" is the second largest and/or brightest key on the keyboard. The enlargement of the letter "o" additionally serves to make the letter "o" easier to press for selection, in the example of a touch screen display 142. Further in the present example, the next most likely character to be entered by the user after the letter o, as determined at the block 508, is the letter "m". Visual aid 608c shows the letter "m" outlined with a solid line. Therefore, in the presently described example, the most likely letters to be used in entering com after "www.rim." are identified using visual aids to make the entry of this text easier, particularly on a touch screen device. These visual aids may be referred to as differential visual aids that accentuate the anticipated order of the key presses in a way that conveys to the user what the expected order of the key presses will be, as shown by visual aids 608a, 608b, and 608c. The differential visual aids may be presented, for example, as size, colour, shading, or outlining differentiation. Audible queues may also be used, for example for people with sight impairments, with queues of differing loudness indicating the anticipated order of the key presses. While the examples of key enlargements, different shading, key outlining, and audible queues are used, these effects may be used together in any combination or in isolation. Additionally, different colours may be used for the keys representing the likely inputs.

Reference is next made to FIG. 7, which shows a screen shot of another example user interface 700 for implementing context-based predictive text input in accordance with one embodiment. The user interface 700 provides added visual aids over the user interface 600, indicated by references 610a, 610b, 612a, and 612b. Visual aids 610a and 610b illustrate key presses associated with the second most likely option 606b, where the entry "www.rim." is completed with ".co.uk". As shown by visual aids 610a and 610b, keys for letters "u" and "k" on the keyboard 602 are presented with an outline surrounding the keys. Visual aids 612a and 612b illustrate key presses associated with the third most likely option 606c, where the entry "www.rim." is completed with de. As shown by visual aids 612a and 612b, keys associated with letters "d" and "e" on the keyboard 602 are presented in a lighter grey shading that is distinctive from the default shading associated with the other keys. In this way, all of the keys on the keyboard 602 that are associated with the top three options for completing the entry, indicated by references 606, are emphasized with visual aids. This differential approach to the visual aids allows the user of the keyboard 602 to quickly identify the order of the keys to be pressed for the option 606a, as well as the keys associated with options 606b and 606c.

The method 500 and the exemplary user interface and visual aids shown in FIGS. 6 and 7 are iterative in nature. For example, referring to FIG. 7, if the user enters a d in response to the keyboard shown in FIG. 7, in the next iteration of the method 500, visual aids 608a-c, 610a-b, and 612a would be dispensed with and the respective keys returned to default size and shading with no outlining, as these keys are likely not relevant to predictions produced by subsequent iterations. Since the likely expected next key would be e to complete "www.rim.de", the "e" key may next be shown according to the format illustrated with visual aid 608a, where the e key may be enlarged, lightened in colour, and outlined. Additionally, there may be other suggested options determined by the method 500 and displayed in the next iteration.

Further, while the method 500 is shown as being executed with the blocks occurring in a particular order, the blocks may be executed in different orders, as appropriate, and some of the blocks may be omitted, as appropriate, in various iterations of the method 500.

While the example shown in FIGS. 6 and 7 predicts completions based on previously entered WEB addresses or stored web addresses, predicted completions may be based on numerous additional factors, such as grammatical rules or the positional context of words in a phrase. The method 500 may also provide suggestions for disambiguation for Eastern languages based on any of the factors outlined above, such as grammar, context, previously usage, etc.

The embodiments of the present disclosure described above are intended to be examples only. Those of skill in the art may effect alterations, modifications and variations to the particular embodiments without departing from the intended scope of the present disclosure. In particular, selected features from one or more of the above-described embodiments may be combined to create alternative embodiments not explicitly described, features suitable for such combinations being readily apparent to persons skilled in the art. The subject matter described herein in the recited claims intends to cover and embrace all suitable changes in technology.

## Claims

1. A device (102) comprising:
a processor (140) for controlling operation of the device (102);
a keyboard (154) coupled to the processor (140) for accepting an input;
at least one display device (142) coupled to the processor (140) for communicating an output;
a memory (300) coupled to the processor (140); and
a storage device coupled to the processor (140);
the device (102) including a predictive text module (308) resident in the memory (300) for execution by the processor (140), the predictive text module being configured to:
receive an input from the keyboard (154), the input comprising a character of a string;
gather relevant contextual data based on the input;
retrieve any relevant stored data from the storage device based on the input;
generate at least one context based prediction based on the received input, the contextual data, and any relevant stored data;
display at least one option for completing the string on the display screen (142) based on the at least one prediction; and
complete the string if one of the options displayed on the display screen (142) is selected by way of a further input.

2. The device (102) according to claim 1, wherein the displaying at least one option on the display screen (142) based on the at least one prediction includes displaying at least one suggested completion of the string for selection based on the at least one context based prediction.

3. The device (102) according to any one of claims 1 or 2, wherein the displaying at least one option on the display screen (142) based on the at least one prediction further includes displaying at least one visual aid on the display screen (142), the visual aid for aiding a user in selecting input options for completing the string.

4. The device (102) according to any one of claims 1-3, wherein the visual aid includes a visual depiction of the keyboard having a plurality of keys on the display screen and further includes at least one of: one or more enlarged keys on the keyboard, one or more of the keys on the keyboard having an outlined periphery, differential shading being applied to one or more of the keys on the keyboard, and different coloring being applied to one or more of the keys on the keyboard.

5. The device (102) according to any one of claims 3 or 4, wherein the at least one visual aid includes differential visual aids that suggest an order of further key inputs for completing the string.

6. The device (102) according to any one of claims 1-5, wherein the display screen (142) is a touch screen and the keyboard (154) forms part of the touch screen (142, 154), and receiving an input from the keyboard (154) includes receiving an input from the touch screen (142, 154).

7. The device (102) according to any one of claims 1-6, wherein the contextual data includes at least one of an application currently being used on the wireless device (102) for which the input and string are intended, a type of field within an application for which the input is intended, actions taken on the wireless device previous to the input, grammatical context of the input and the string, positional context of the input and the string relative to other words, the country in which the wireless device is located, the time of day at which the input is received, and the date on which the input is received.

8. The device (102) according to any one of claims 1-7, wherein the relevant stored data includes at least one of historical contextual information about habits of particular users of the wireless device, web addresses previously entered into the wireless device and frequency of the web addresses, words previously entered into a word processor on the wireless device and frequency of the words, email addresses previously entered into wireless device and frequency of the email addresses, and phone numbers previously entered into wireless device and frequency of the phone numbers.

9. The device (102) according to any one of claims 1-7, wherein the relevant stored data includes preloaded data and subsequently learned data.

10. A method for providing context based predictive text entry on a device (102) having a processor and a keyboard (154), display screen (142), and storage device connected to the processor, the method comprising:
receiving an input from the keyboard (154), the input comprising a character of a string;
gathering relevant contextual data based on the input;
retrieving any relevant stored data from the storage device based on the input;
generating at least one context based prediction based on the received input, the contextual data, and any relevant stored data;
displaying at least one option for completing the string on the display screen (142) based on the at least one prediction; and
completing the string if one of the options displayed on the display screen (142) is selected by way of a further input.

11. The method according to claim 10, wherein the displaying at least one option on the display screen (142) based on the at least one prediction includes displaying at least one suggested completion of the string for selection based on the at least one context based prediction.

12. The method according to any one of claims 10 or 11, wherein the displaying at least one option on the display screen (142) based on the at least one prediction further includes displaying at least one visual aid on the display screen (142), the visual aid for aiding a user in selecting input options for completing the string.

13. The method according to any one of claims 10-12, wherein the visual aid includes a visual depiction of the keyboard having a plurality of keys on the display screen and further includes at least one of: one or more enlarged keys on the keyboard, one or more of the keys on the keyboard having an outlined periphery, differential shading being applied to one or more of the keys on the keyboard, and different coloring being applied to one or more of the keys on the keyboard.

14. The method according to any one of claims 12 or 13, wherein the at least one visual aid includes differential visual aids that suggest an order of further key inputs for completing the string.

15. The method according to any one of claims 10-14, wherein the display screen (142) is a touch screen and the keyboard (154) forms part of the touch screen (142, 154), and receiving an input from the keyboard (154) includes receiving an input from the touch screen (142, 154).

16. The method according to any one of claims 10-15, wherein the contextual data includes at least one of an application currently being used on the wireless device (102) for which the character and string are intended, a type of field within an application for which the input is intended, actions taken on the wireless device previous to the input, grammatical context of the input and the string, the country in which the wireless device is located, the time of day at which the input is received, and the date on which the input is received.

17. The method according to any one of claims 10-16, wherein the relevant stored data includes at least one of historical contextual information about habits of particular users of the wireless device, web addresses previously entered into the wireless device and frequency of the web addresses, words previously entered into a word processor on the wireless device and frequency of the words, email addresses previously entered into wireless device and frequency of the email addresses, and phone numbers previously entered into wireless device and frequency of the phone numbers.

18. The method according to any one of claims 10-16, wherein the relevant stored data includes preloaded data and subsequently learned data.

19. A computer program product comprising a computer readable medium having computer readable code stored thereon, for execution by a processor (140) of a device (102), the computer program product causing the processor (140) to provide context based predictive text entry on the device (102), the device (102) also having a keyboard (154), display screen (142), and storage device connected to the processor (140), the computer program product comprising:
code for receiving an input from the keyboard (154), the input comprising a character of a string;
code for gathering relevant contextual data based on the input;
code for retrieving any relevant stored data from the storage device based on the input;
code for generating at least one context based prediction based on the received input, the contextual data, and any relevant stored data;
code for displaying at least one option for completing the string on the display screen (142) based on the at least one prediction; and
code for completing the string if one of the options displayed on the display screen (142) is selected by way of a further input.

## Amended claims

### Amended claims in accordance with Rule 137(2) EPC.

**1.** A device (102) comprising:
a processor (140) for controlling operation of the device (102);
a keyboard (154) coupled to the processor (140) for accepting an input;
at least one display device (142) coupled to the processor (140) for communicating an output;
a memory (300) coupled to the processor (140); and
a storage device coupled to the processor (140);
the device (102) including a predictive text module (308) resident in the memory (300) for execution by the processor (140), the predictive text module being configured to:
receive an input from the keyboard (154), the input comprising a character of a string;
gather relevant contextual data based on the input;
retrieve any relevant stored data from the storage device based on the input;
generate at least one context based prediction based on the received input, the contextual data, and any relevant stored data;
display at least one option for completing the string on the display screen (142) based on the at least one prediction; and
complete the string if one of the options displayed on the display screen (142) is selected by way of a further input;
wherein the at least one option includes at least one visual aid that suggests an order of two or more further key inputs for completing the string.

**2.** The device (102) according to claim 1, wherein the displaying at least one option on the display screen (142) based on the at least one prediction includes displaying at least one suggested completion of the string for selection based on the at least one context based prediction.

**3.** The device (102) according to any one of claims 1-2, wherein the at least one visual aid includes a visual depiction of the keyboard having a plurality of keys on the display screen and further includes at least one of: one or more enlarged keys on the keyboard, one or more of the keys on the keyboard having an outlined periphery, differential shading being applied to one or more of the keys on the keyboard, and different coloring being applied to one or more of the keys on the keyboard.

**4.** The device (102) according to any one of claims 1-3, wherein the display screen (142) is a touch screen and the keyboard (154) forms part of the touch screen (142, 154), and receiving an input from the keyboard (154) includes receiving an input from the touch screen (142, 154).

**5.** The device (102) according to any one of claims 1-4, wherein the contextual data includes at least one of an application currently being used on the wireless device (102) for which the input and string are intended, a type of field within an application for which the input is intended, actions taken on the wireless device previous to the input, grammatical context of the input and the string, positional context of the input and the string relative to other words, the country in which the wireless device is located, the time of day at which the input is received, and the date on which the input is received.

**6.** The device (102) according to any one of claims 1-5, wherein the relevant stored data includes at least one of historical contextual information about habits of particular users of the wireless device, web addresses previously entered into the wireless device and frequency of the web addresses, words previously entered into a word processor on the wireless device and frequency of the words, email addresses previously entered into wireless device and frequency of the email addresses, and phone numbers previously entered into wireless device and frequency of the phone numbers.

**7.** The device (102) according to any one of claims 1-5, wherein the relevant stored data includes preloaded data and subsequently learned data.

**8.** A method for providing context based predictive text entry on a device (102) having a processor and a keyboard (154), display screen (142), and storage device connected to the processor, the method comprising:
receiving an input from the keyboard (154), the input comprising a character of a string;
gathering relevant contextual data based on the input;
retrieving any relevant stored data from the storage device based on the input;
generating at least one context based prediction based on the received input, the contextual data, and any relevant stored data;
displaying at least one option for completing the string on the display screen (142) based on the at least one prediction; and
completing the string if one of the options displayed on the display screen (142) is selected by way of a further input;
wherein the at least one option includes at least one visual aid that suggests an order of two or more further key inputs for completing the string.

**9.** The method according to claim 8, wherein the displaying at least one option on the display screen (142) based on the at least one prediction includes displaying at least one suggested completion of the string for selection based on the at least one context based prediction.

**10.** The method according to any one of claims 8-9, wherein the at least one visual aid includes a visual depiction of the keyboard having a plurality of keys on the display screen and further includes at least one of: one or more enlarged keys on the keyboard, one or more of the keys on the keyboard having an outlined periphery, differential shading being applied to one or more of the keys on the keyboard, and different coloring being applied to one or more of the keys on the keyboard.

**11.** The method according to any one of claims 8-10, wherein the display screen (142) is a touch screen and the keyboard (154) forms part of the touch screen (142, 154), and receiving an input from the keyboard (154) includes receiving an input from the touch screen (142, 154).

**12.** The method according to any one of claims 8-11, wherein the contextual data includes at least one of an application currently being used on the wireless device (102) for which the character and string are intended, a type of field within an application for which the input is intended, actions taken on the wireless device previous to the input, grammatical context of the input and the string, the country in which the wireless device is located, the time of day at which the input is received, and the date on which the input is received.

**13.** The method according to any one of claims 8-12, wherein the relevant stored data includes at least one of historical contextual information about habits of particular users of the wireless device, web addresses previously entered into the wireless device and frequency of the web addresses, words previously entered into a word processor on the wireless device and frequency of the words, email addresses previously entered into wireless device and frequency of the email addresses, and phone numbers previously entered into wireless device and frequency of the phone numbers.

**14.** The method according to any one of claims 8-12, wherein the relevant stored data includes preloaded data and subsequently learned data.

**15.** A computer program product comprising a computer readable medium having computer readable code stored thereon, for execution by a processor (140) of a device (102), the computer program product causing the processor (140) to provide context based predictive text entry on the device (102), the device (102) also having a keyboard (154), display screen (142), and storage device connected to the processor (140), the computer program product comprising:
code for receiving an input from the keyboard (154), the input comprising a character of a string;
code for gathering relevant contextual data based on the input;
code for retrieving any relevant stored data from the storage device based on the input;
code for generating at least one context based prediction based on the received input, the contextual data, and any relevant stored data;
code for displaying at least one option for completing the string on the display screen (142) based on the at least one prediction; and
code for completing the string if one of the options displayed on the display screen (142) is selected by way of a further input;
wherein the at least one option includes at least one visual aid that suggests an order of two or more further key inputs for completing the string.
